# EUROPÄISCHE PATENTSCHRIFT

(11) **EP 3 585 659 B1**
(45) Veröffentlichungstag und Bekanntmachung des Hinweises auf die Patenterteilung: **19.01.2022**
(21) Anmeldenummer: 18706244.3
(22) Anmeldetag: 15.02.2018
(51) Int. Cl.: B60S 1/34, B60S 1/58, B60S 1/04

(54) **KRAFTFAHRZEUG-SCHEIBENWISCHER SOWIE HIERMIT AUSGESTATTETES KRAFTFAHRZEUG**
MOTOR VEHICLE WIPER AND MOTOR VEHICLE EQUIPPED THEREWITH
ESSUIE-GLACE DE VÉHICULE AUTOMOBILE ET VÉHICULE AUTOMOBILE MUNI DUDIT ESSUIE-GLACE

(30) Priorität: 22.02.2017 DE 102017202876
(43) Veröffentlichungstag der Anmeldung: 01.01.2020
(73) Patentinhaber: Bayerische Motoren Werke Aktiengesellschaft, 80809 München (DE)
(72) Erfinder: ELTROP, Raphael, 80807 Muenchen (DE)
(86) Internationale Anmeldenummer: PCT/EP2018/053794
(87) Internationale Veröffentlichungsnummer: WO 2018/153768

(56) Entgegenhaltungen:
- WO-A1-99/19188
- WO-A1-2010/121665
- DE-C1- 4 442 527
- FR-A1- 2 821 907
- US-A- 5 570 923
- US-A1- 2013 145 570

## Beschreibung

Die vorliegende Erfindung betrifft einen Kraftfahrzeug-Scheibenwischer gemäß Anspruch 1 sowie ein entsprechend ausgestattetes Kraftfahrzeug gemäß Anspruch 10.

Aus der DE 44 42 527 C1 ist ein Kraftfahrzeug-Scheibenwischer mit einem Wischerarm und einem daran befestigten Wischblatt bekannt. Das Wischblatt ist in einer an dem Wischarm vorgesehenen Hülse entlang einer Längsachse axial fest gelagert, um definiert vorgespannt gegen eine Scheibe mit einem konstanten Krümmungsradius anzuliegen. Zum Zwecke eines Wechsels des Wischblattes ist es in nachteiliger Weise erforderlich, den Wischarm um eine orthogonal zu der Längsachse und von dieser weit beabstandet vorgesehenen Schwenkachse zu verschwenken. Wie insbesondere der Figur 5 der DE 44 42 527 C1 zu entnehmen ist, baut der bekannte Kraftfahrzeug-Scheibenwischer in ebenfalls nachteiliger Weise groß.

Aus der WO 99/19188 A1, der US 2013/145570 A1, der FR 2 821 907 A1 und der US 5 570 923 A ist jeweils ein Kraftfahrzeug-Scheibenwischer mit einem Wischerarm bekannt, der mit einer Wischerwelle in Wirkverbindung steht und ein Wischblatt aufweist, wobei der Wischerarm an einem Lagerteil befestigt ist, das an der Wischerwelle beweglich gelagert ist.

Weiterhin ist aus der US 2013/145570 A1 ein Lagerteil bekannt, das an der Wischerwelle zwischen einer Betriebsstellung des Kraftfahrzeug-Scheibenwischers und einer einen Wechsel des Wischblattes erlaubenden Wechselstellung axial verschieblich gelagert ist, in der Betriebsstellung radial fest und zur Einnahme der Wechselstellung radial verstellbar ist.

Schließlich ist aus der WO 99/19188 A1 ein Lagerteil bekannt, das als Hülse ausgebildet ist, die die Wischerwelle sowohl in der Betriebsstellung als auch der Wechselstellung teilweise umgibt, ein die axiale und/oder radiale Bewegung des Lagerteils begrenzendes Arretierungsmittel, das mindestens abschnittsweise formschlüssig mit der Hülse wirkverbunden ist, und ein Vorspannmittel, das mit dem Lagerteil wirkverbunden ist und dieses in der Wechselstellung vorspannt.

Es ist Aufgabe der vorliegenden Erfindung, den zuvor genannten Nachteil zu überwinden und gleichzeitig eine störungsunanfällige Bewegung des Lagerteils zu ermöglichen.

Diese Aufgabe wird durch einen Kraftfahrzeug-Scheibenwischer gemäß Anspruch 1 gelöst.

Der erfindungsgemäße Kraftfahrzeug-Scheibenwischer umfasst einen Wischerarm, der mit einer Wischerwelle in Wirkverbindung steht und ein Wischblatt aufweist. Der Wischerarm ist hierzu an einem Lagerteil angeordnet, das an der Wischerwelle beweglich gelagert ist, wobei das Lagerteil als Hülse ausgebildet ist, die die Wischerwelle teilweise umgibt. Dabei ist die Verbindung von Lagerteil und Wischerwelle derart eingerichtet, dass eine Bewegung zwischen den genannten Elementen zum Zwecke eines Entfernens oder Anbringens des Wischerarmes, d.h. in einer Wechselstellung, ermöglicht ist, während eine Bewegung der genannten Elemente in einer Ruhestellung (d.h. bei einem Nichtbetrieb) oder in einer Betriebsstellung (d.h. bei einer Wischbewegung) des Kraftfahrzeug-Scheibenwischers im Wesentlichen ausgeschlossen ist. Mithin ist das Lagerteil an der Wischerwelle zwischen der Betriebsstellung des Kraftfahrzeug-Scheibenwischers und einer einen Wechsel des Wischblattes erlaubenden Wechselstellung axial verschieblich gelagert, wobei das Lagerteil an der Wischerwelle in der Betriebsstellung radial fest und zur Einnahme der Wechselstellung radial verstellbar gelagert ist. Es sei jedoch angemerkt, dass in der Betriebsstellung ein Nachfolgen des Wischblattes auf der Oberfläche der zu reinigenden Scheibe gleichwohl ermöglicht ist. Hiermit ist ein klein bauender Kraftfahrzeug-Scheibenwischer geschaffen, dessen Wischblatt auf einfache und komfortable Weise befestigt und/oder entfernt werden kann und das in der Betriebsstellung mit konstantem Anpressdruck gegen die Scheibe anliegt.

Dem Grundsatz nach können die axiale und/oder radiale Verstellung bzw. Einstellung des Lagerteils manuell vorgenommen werden. Zur Erleichterung dieses Vorhabens ist ein die axiale und/oder radiale Bewegung des Lagerteils begrenzendes Arretierungsmittel vorgesehen, das die Einstellungsbewegung des Lagerteils bzw. dessen axialen Verstellweg und/oder dessen radialen Schwenkwinkel begrenzt.

Zur weiteren Verringerung des erforderlichen Bauraumes des Kraftfahrzeug-Scheibenwischers sowie für eine präzise Führung des Lagerteils auf der Wischerwelle zur Einnahme der Wechselstellung bzw. zur Rückverlagerung aus dieser heraus ist das Arretierungsmittel mindestens abschnittsweise formschlüssig mit der Hülse wirkverbunden. Die formschlüssige Verbindung ist derart ausgestaltet, dass sie die axiale und radiale Bewegung des Lagerteils zur Einnahme der Betriebsstellung und der Wechselstellung erlaubt. Das Arretierungsmittel und der dieses umgebende, eine axiale Verschieblichkeit erlaubende, Abschnitt der Hülse sind komplementär nach Art einer Welle-Nabe-Verbindung, insbesondere mit einer Gleitfeder, einer Zahnwelle, einer Keilwelle, einer Kerbzahnwelle und/oder einer Polygonwelle ausgebildet. Diese erlauben die axiale Verschiebung, verhindern jedoch in dem genannten Abschnitt eine radiale Bewegung des Lagerteils, so dass eine durch die Wischerwelle herbeigeführte Drehbewegung des Wischerarmes während seines Betriebes ermöglicht ist. Zur Ermöglichung einer radialen Bewegung des Lagerteils in der Wechselstellung ist vorgesehen, dass die welle-nabe-verbindungsartige komplementäre Ausbildung von Hülse und Wischerwelle, insbesondere durch geeignete Längen bzw. Positionen derselben, aufgehoben ist.

Das Arretierungsmittel weist erfindungsgemäß ein quer zur Längsachse der Wischerwelle ausgebildetes Profil auf, an dem ein in der Hülse befindlicher erster Abschnitt und zweiter Abschnitt axial verschieblich und ein zwischen diesen befindlicher dritter Abschnitt axial und rotatorisch geführt ist. Die Wischerwelle ist hierzu komplementär ausgebildet. Hinsichtlich des Teils des Profils, der eine axiale Verschiebung bzw. radiale Bewegung erlaubt, gelten die vorherigen, die Welle-Nabe-Verbindung betreffenden Ausführungen entsprechend. Durch diese erfindungsgemäße Anordnung wird in vorteilhafter Weise ein definierter Verstellweg des Lagerteils bei geringem Bauraum ermöglicht.

Wenn das Profil quer zur Längsachse der Wischerwelle betrachtet mindestens einen ersten Aufnahmeabschnitt und einen zweiten Aufnahmeabschnitt aufweist, wobei der erste Aufnahmeabschnitt in der Betriebsstellung formschlüssig mit dem ersten Abschnitt der Hülse und der zweite Aufnahmeabschnitt in der Wechselstellung formschlüssig mit dem zweiten Abschnitt wirkverbunden ist, wird in vorteilhafter Weise der definierte Verstellweg des Lagerteils bei geringem Bauraum weiter verbessert.

Eine besonders einfach gestaltete Führung der Hülse gegenüber dem zuvor offenbarten Lagerteil ist in vorteilhafter Weise erzielt, wenn die Hülse mindestens einen Vorsprung aufweist, der in der Betriebsstellung in den ersten Aufnahmeabschnitt und in der Wechselstellung in den zweiten Aufnahmeabschnitt eingreift.

Gemäß einer bevorzugten Ausführungsform ist ein Vorspannmittel vorgesehen, das mit dem Lagerteil wirkverbunden ist und dieses in der Wechselstellung vorspannt. Es sei angemerkt, dass dieses Vorspannmittel insbesondere als Schraubenfeder eingerichtet und derart in der Hülse angeordent sein kann, dass es in der Betriebsstellung unbelastet und lediglich bei Einnahme und während der Wechselstellung vorgespannt ist. Kumulativ ist es möglich, dass das Vorspannmittel auch in der Betriebsstellung auf das Lagermittel einwirkt, um den Wischerarm gegen die Scheibe vorzuspannen.

Gemäß einer bevorzugten Ausführungsform ist das Wischblatt in einer Aufnahme des Lagerteils mindestens teilweise aufgenommen. Hierdurch ist ein besonders einfacher Wechsel des Wischblattes ermöglicht.

Die zuvor genannte Aufgabe wird ebenfalls durch ein Kraftfahrzeug mit mindestens einer Kraftfahrzeug-Scheibe und einem mit einer Wischerwelle wirkverbundenen Antrieb erzielt, das mindestens einen Kraftfahrzeug-Scheibenwischer der zuvor offenbarten Art aufweist. Die zuvor genannten Vorteile gelten adäquat.

Nachstehend erfolgt unter Bezugnahme auf die beigefügten, nicht maßstäblichen Figuren eine detaillierte, nicht präjudizierende, insbesondere einschränkende, Beschreibung von Ausführungsbeispielen der vorliegenden Erfindung. Gleiche Elemente sind mit identischen Bezugszeichen versehen, soweit nichts anderes angegeben wird.
- Fig. 1: ist eine schematische Rückansicht eines teilweise dargestellten erfindungsgemäßen Kraftfahrzeuges.
- Fig. 2: ist eine perspektivische Rückansicht auf ein teilweise dargestelltes, gegenüber Fig. 1 alternatives erfindungsgemäßes Kraftfahrzeug.
- Fig.3: ist eine perspektivische Rückansicht auf ein teilweise dargestelltes, gegenüber Fig. 1 und Fig. 2 alternatives erfindungsgemäßes Kraftfahrzeug.
- Fig. 4: ist eine perspektivische Rückansicht auf ein teilweise dargestelltes, gegenüber Fig. 1 bis Fig. 3 alternatives erfindungsgemäßes Kraftfahrzeug.
- Fig. 5: zeigt einen Teil eines in Betriebsstellung befindlichen erfindungsgemäßen Kraftfahrzeug-Scheibenwischers in geschnittener Seitenansicht.
- Fig. 6: zeigt den in Figur 5 dargestellten Teil in Wechselstellung.
- Fig. 7: ist eine vergrößerte Ansicht eines in Betriebsstellung befindlichen Lagerteils.

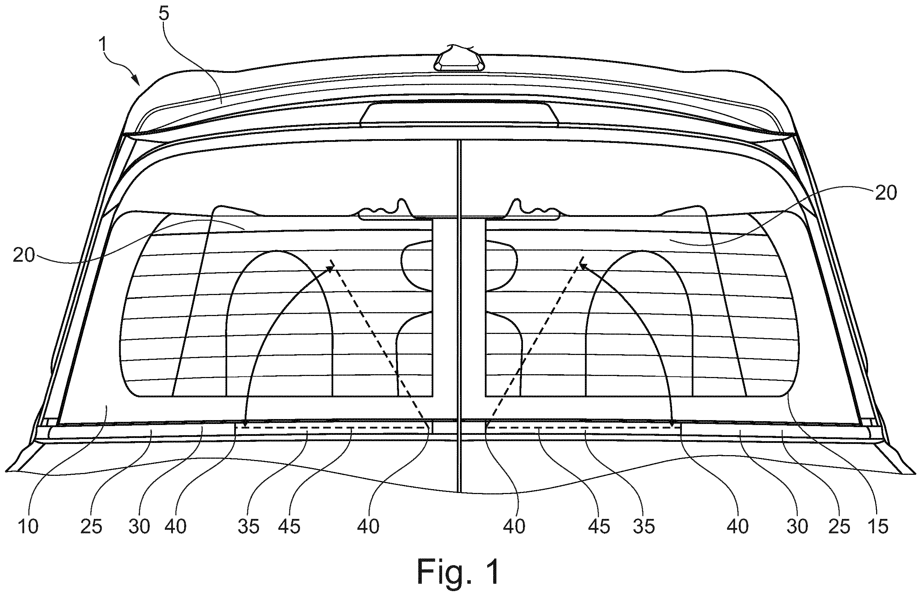

In Figur 1 ist ein erfindungsgemäßes Kraftfahrzeug 1 in Rückansicht gezeigt, das eine an der Karosserie 5 links angeschlagene linke Tür 10 und eine an der Karosserie 5 rechts angeschlagene Tür 15 aufweist. Jede der beiden Türen 10 bzw. 15 weist jeweils eine Scheibe 20 auf, an deren jeweiligen unteren Rand sich ein jeweiliges Karosserieteil 25 befindet. Das Karosserieteil 25 ist in dem hier gezeigten Ausführungsbeispiel ein Rahmen 30, der im Wesentlichen horizontal ausgerichtet ist und sich von der linken bzw. rechten Außenseite der Scheibe 20 in deren Mitte erstreckt. Hieran anschließend ist eine Blende 35 vorgesehen, die sich im Wesentlichen in optischer Verlängerung zu dem Rahmen 30 bis in diejenigen Abschnitte der linken Tür 10 und der rechten Tür 15 erstrecken, die einander benachbart sind. Die Blenden 35, insbesondere ihre Oberflächen, entsprechen hinsichtlich ihrer optischen Ausgestaltung jeweils den Rahmen 30 und bilden mit diesen eine optische Einheit. Letztere wird lediglich durch Spalte 40 unterbrochen, die eine Bewegung der hier in Nichtgebrauchsstellung befindlichen und somit durch die Blenden 35 abgedeckten Kraftfahrzeug-Scheibenwischer 45 in eine Gebrauchsstellung ermöglichen. Eine mögliche, an sich bekannte Bewegung des Kraftfahrzeug-Scheibenwischers 45 ist durch die gestrichelten Linien symbolisiert.

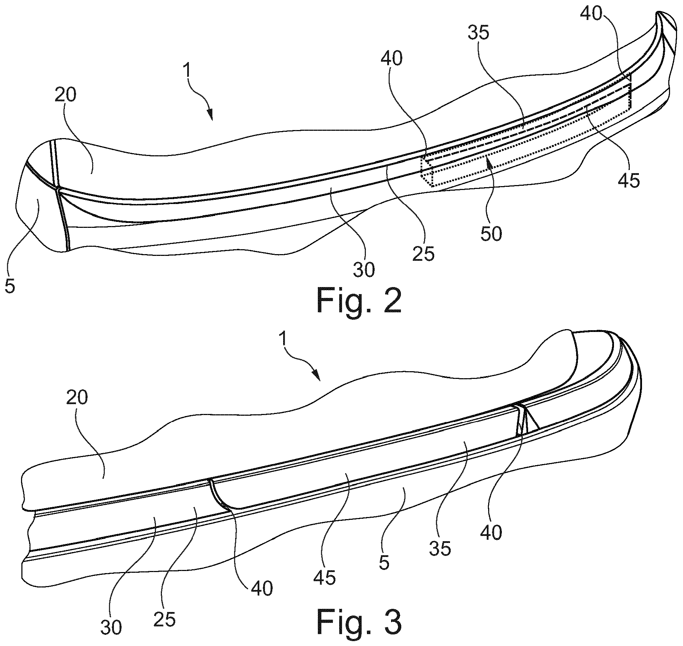

In Figur 2 ist eine gegenüber Figur 1 alternative Ausführungsform eines Kraftfahrzeuges 1 gezeigt, bei dem lediglich ein einziger, hier in Nichtgebrauchsstellung befindlicher Kraftfahrzeug-Scheibenwischer 45 vorgesehen ist. Die Scheibe 20 ist eine Heckscheibe, die starr an der Karosserie 5 befestigt ist. Der Kraftfahrzeug-Scheibenwischer 45 befindet sich in einer Ausnehmung 50, die in dem Karosserieteil 25 angeordnet ist. Diese wird durch eine an dem Kraftfahrzeug-Scheibenwischer 45 befindliche Blende 35 abgedeckt.

In Figur 3 ist eine weitere alternative Ausführungsform eines Kraftfahrzeuges 1 gezeigt. Der Kraftfahrzeug-Scheibenwischer 45 befindet sich nunmehr auch in der hier gezeigten Nichtgebrauchsstellung auf der Scheibe 20, ohne in einer Ausnehmung 50 aufgenommen zu sein. Seine Blende 35 geht optisch in das als Rahmen 30 ausgebildete Karosserieteil 25 ein und wird lediglich durch die Spalte 40 unterbrochen.

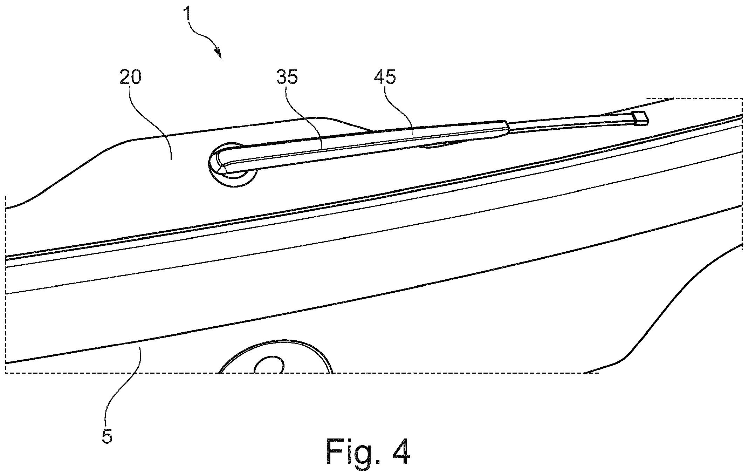

In Figur 4 ist eine zusätzliche alternative Ausführungsform eines Kraftfahrzeuges 1 gezeigt, bei dem eine gegenüber der in Figur 3 gezeigten Blende 35 eine kürzere Blende 35 vorgesehen ist. Der Kraftfahrzeug-Scheibenwischer 45 ist gemäß diesem Ausführungsbeispiel mit der Scheibe 20 verbunden.

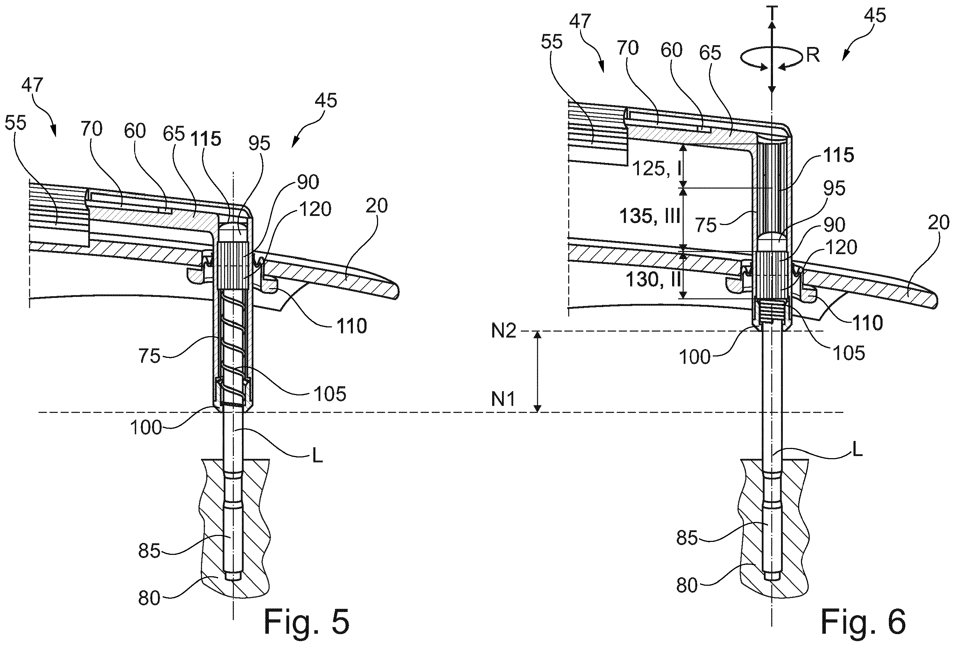

In Figur 5 ist ein Teil eines Kraftfahrzeug-Scheibenwischers 45 in Seitenansicht im Schnitt gezeigt. Der Kraftfahrzeug-Scheibenwischer 45 befindet sich in Betriebsstellung, d.h. ein an einem Wischerarm 47 befindliches Wischblatt 55 liegt gegen die Scheibe 20 an. Mit einem Ende ist das Wischblatt 55 in einer Aufnahme 60 eines Lagerteils 65 befestigt. Die Befestigung erfolgt in dem hier gezeigten Ausführungsbeispiel formschlüssig durch ein Einstecken einer Zunge 70 des Wischblattes 55 in die Aufnahme 60 des Lagerteiles 65. Dies ist jedoch nicht zwingend; vielmehr können auch andere mechanische Befestigungsarten vorgesehen werden.

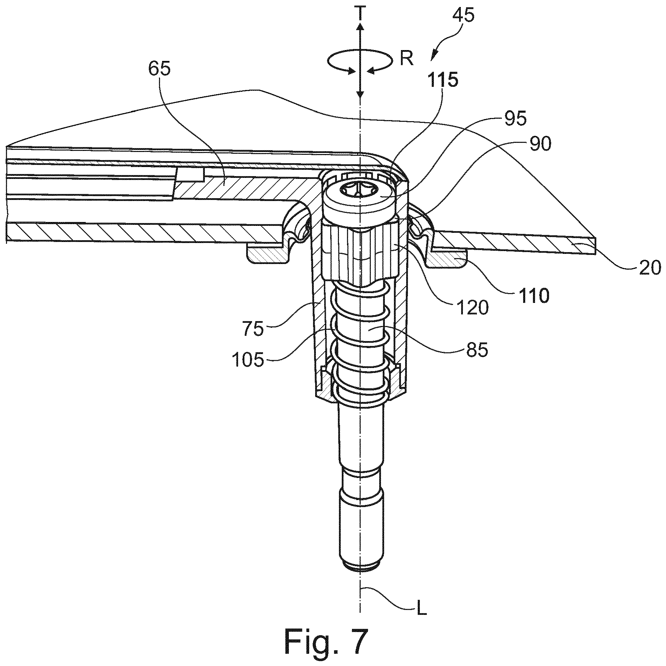

Das Lagerteil 65 weist eine Hülse 75 auf, die eine durch einen an sich bekannten, hier lediglich symbolisch gezeigten Antrieb 80 angetriebene Wischerwelle 85 sowohl in der Betriebsstellung als auch in einer in Figur 6 gezeigten Wechselstellung teilweise umgibt. Die Wischerwelle 85 weist eine Längsachse L auf, um die der Wischerarm An ihrem dem Antrieb 80 entgegengesetzten Ende ist an der Wischerwelle 85 ein Arretierungsmittel 90 vermittels einer Schraube 95 befestigt. Das Arretierungsmittel 90 weist einen profilierten Querschnitt aus, wie insbesondere unter Bezugnahme auf Figur 7 gezeigt werden wird. An ihrem dem Arretierungsmittel 90 entgegengesetzten Ende ist die Hülse 75 vermittels eines Verschlussmittels 100 geschlossen. Ein als Zylinderfeder ausgebildetes Vorspannmittel 105 ist entspannt zwischen dem Verschlussmittel 100 und dem Arretierungsmittel 90 sowie den entsprechenden Abschnitt der Wischerwelle 85 umgebend angeordnet. Im Durchdringungsbereich des Arretierungsmittels 90 durch die Scheibe 20 befindet sich ein Dichtungsmittel 110, das ein Eindringen von Feuchtigkeit in Richtung Antriebsmittel 80 in an sich bekannter Weise verhindert.

Das untere Ende der Hülse 75 befindet sich in Betriebsstellung des Kraftfahrzeug-Scheibenwischers 45 auf einem Niveau N1, das mit der in der Figur 5 horizontal ausgerichteten Strichlinie symbolisiert ist. Wie nun der Figur 6 entnommen werden kann, ist der Wischerarm 47 entlang der Längsachse L des Antriebes 80 in Richtung T axial verschieblich bis zu einem mit N2 symbolisierten Niveau verschiebbar, in dem er seine Wechselstellung einnimmt. Durch die axiale Bewegung des Wischerarmes 47 entfernt sich das Wischblatt 55 von der Scheibe 20, so dass es auf einfache und komfortable Weise entfernt und ein neues, hier nicht gezeigtes Wischblatt 55 in der Aufnahme 60 befestigt werden kann. Durch eine zu der Richtung T entgegengesetzte Bewegung kann der Wischerarm 47 in die Betriebsstellung zurückgeführt werden, in der das neue Wischblatt 55 gegen die Scheibe 20 anliegt.

Zur Erleichterung der axialen Bewegung in Richtung T und zurück ist das Arretierungsmittel 90 in der Hülle 75 derart ausgebildet, dass sich in Längsrichtung L erstreckende, jeweils korrespondierende Nuten 115 bzw. Federn 120 als Führungsmittel zusammenwirken. Darüber hinaus übertragen diese das von dem Antrieb 80 während des Betriebes des Kraftfahrzeug-Scheibenwischers 45 ausgehende Drehmoment auf den Wischerarm 47, so dass eine kontrollierte Bewegung desselben ermöglicht ist. Weiter wird das Vorspannmittel 105 bei einer Bewegung der Hülse 75 in die Wechselstellung komprimiert, wodurch eine Rückstellbewegung von dem Niveau N2 zum Niveau N1 erleichtert wird.

Neben einer translatorischen Bewegung der Hülle 75 kann diese in ausgewiesenen Positionen auch um die Längsachse L in einer Drehrichtung R verschwenkt werden, wodurch sich der für einen Wechsel des Wischblattes 55 zur Verfügung stehende Raum in vorteilhafter Weise weiter vergrößert und einen verbesserten Wischblattwechsel-Komfort ermöglicht: In der in Fig. 5 gezeigten Betriebsstellung befindet sich das Arretierungsmittel 90 in einem ersten, der Aufnahme 60 benachbarten und als erster Aufnahmeabschnitt 125 ausgebildeten Abschnitt I der Hülse 75, wobei diese miteinander in Richtung der Längsachse L verschieblich, aber nicht gegeneinader um die Längsachse L verdrehbar ausgebildet sind. Dies gilt ebenso für einen als zweiten Aufnahmeabschnitt 130 ausgebildeten zweiten Abschnitt II der Hülse 75, der sich an dem dem ersten Abschnitt I entfernten Ende der Hülse 75 befindet. Zwischen dem ersten Bereich I und dem zweiten Bereich II bzw. dem ersten Aufnahmeabschnitt 125 und dem zweiten Aufnahmeabschnitt 130 befindet sich ein einen dritten Aufnahmeabschnitt 135 aufweisender dritter Bereich III, der eine Drehung der Hülse 75 um die Längsachse L in Drehrichtung R erlaubt.

Die Länge der genannten Aufnahmeabschnitte 125, 130 bzw. 135 und der Bereiche I, II bzw. III ist im Wesentlichen gleich groß. Alternativ kann vorgsehen sein, dass die Länge des dritten Abschnittes 135 bzw. des dritten Bereiches III größer ist als die Länge der jeweiligen anderen Abschnitte 125, 130 bzw. Bereiche I, II.

Für einen Wechsel eines Wischblattes 55 sind mithin in vorteilhafter Weise lediglich folgende Verfahrensschritte durchzuführen:
1. Durchführen einer translatorischen Bewegung des Lagerteils 65 bzw. der Hülse 75 entlang der Längsachse L des Abschnittes I in Längsrichtung T, wobei diese durch eine Kombination von miteinander zusammenwirkenden Nuten 115 und Federn 120 in der Hülse 75 und dem Arretierungsmittel 90 axial geführt werden. Die translatorische Bewegung wird solange durchgeführt, bis der Abschnitt I vollständig von dem Arretierungsmittel 90 befreit und vollständig in den Abschnitt III eingetreten ist.
2. Wenn der Abschnitt I vollständig von dem Arretierungsmittel 90 befreit und vollständig in den Abschnitt III eingetreten ist, Durchführen einer rotatorischen Bewegung des Lagerteils 65 bzw. der Hülse 75 von einer Ausgangsposition um die Längsachse L in Drehrichtung R. Hierbei wird eine Rotation um einen Winkel von im Wesentlichen kleiner als 90° bevorzugt. Besonders bevorzugt wird ein Winkel von im Wesentlichen 45° +/- 15°.
3. Wenn die rotatorische Bewegung vollendet ist, Entfernen des Wischerblattes 55 und Befestigen eines alternativen Wischerblattes 55.
4. Wenn das alternative Wischerblatt 55 befestigt ist, Umkehrung der rotatorischen Bewegung entgegen der Drehrichtung R und, sobald die Ausgangsposition gemäß Ziffer 2. erreicht, ist, Durchführen einer translatorischen Bewegung des Lagerteils 65 entlang der Längsachse L und entgegen der in Ziffer 1. genannten Längsrichtung T derart, dass dieses vollständig in den Abschnitt II eintritt.

Die in den Figuren 1 bis 7 gezeigten Kraftfahrzeug-Scheibenwischer 45 sind jeweils in den Heckbereichen der Kraftfahrzeuge 1 angebracht. Es versteht sich jedoch, dass diese auch im Frontbereich der Kraftfahrzeuge 1 angeordnet werden können.

### Bezugszeichenliste

- 1: Kraftfahrzeug
- 5: Karosserie
- 10: linke Tür
- 15: rechte Tür
- 20: Scheibe
- 25: Karosserieteil
- 30: Rahmen
- 35: Blende
- 40: Spalt
- 45: Kraftfahrzeug-Scheibenwischer
- 47: Wischerarm
- 50: Ausnehmung
- 55: Wischblatt
- 60: Aufnahme
- 65: Lagerteil
- 70: Zunge
- 75: Hülse
- 80: Antrieb
- 85: Wischerwelle
- 90: Arretierungsmittel
- 95: Schraube
- 100: Verschlussmittel
- 105: Vorspannmittel
- 110: Dichtungsmittel
- 115: Nuten
- 120: Federn
- 125: erster Aufnahmeabschnitt
- 130: zweiter Aufnahmeabschnitt
- 135: dritter Aufnahmeabschnitt

- L: Längsachse
- R: Drehrichtung
- T: Längsrichtung

## Patentansprüche

1. Kraftfahrzeug-Scheibenwischer (45) mit einem Wischerarm (47), der mit einer Wischerwelle (85) in Wirkverbindung steht und ein Wischblatt (55) aufweist,
- wobei der Wischerarm (47) an einem Lagerteil (65) befestigt ist, das an der Wischerwelle (85) beweglich gelagert ist,
- wobei das Lagerteil (65) als Hülse (75) ausgebildet ist, die die Wischerwelle (85) sowohl in der Betriebsstellung als auch der Wechselstellung teilweise umgibt,
- welches Lagerteil (65) an der Wischerwelle (85) zwischen einer Betriebsstellung des Kraftfahrzeug-Scheibenwischers (45) und einer einen Wechsel des Wischblattes (55) erlaubenden Wechselstellung axial verschieblich gelagert ist, und
- welches Lagerteil (65) an der Wischerwelle (85) in der Betriebsstellung radial fest und zur Einnahme der Wechselstellung radial verstellbar gelagert, und wobei
- ein die axiale und/oder radiale Bewegung des Lagerteils (65) begrenzendes Arretierungsmittel (90) vorgesehen ist, das mindestens abschnittsweise formschlüssig mit der Hülse (75) wirkverbunden ist,
**dadurch gekennzeichnet dass** das Arretierungsmittel (90) ein quer zur Längsachse (L) der Wischerwelle (85) ausgebildetes Profil (115, 120) aufweist, an dem ein in der Hülse (75) befindlicher erster Aufnahmeabschnitt (125) und zweiter Aufnahmeabschnitt (130) axial verschieblich und ein zwischen diesen befindlicher dritter Aufnahmeabschnitt (135) axial und rotatorisch geführt ist.

2. Kraftfahrzeug-Scheibenwischer (45) nach Anspruch 1, **dadurch gekennzeichnet, dass** das Profil quer zur Längsachse der Wischerwelle (85) betrachtet mindestens einen ersten Aufnahmeabschnitt (125) und einen zweiten Aufnahmeabschnitt (130) aufweist, wobei der erste Aufnahmeabschnitt (125) in der Betriebsstellung formschlüssig mit dem ersten Abschnitt (I) der Hülse (75) und der zweite Aufnahmeabschnitt (130) in der Wechselstellung formschlüssig mit dem zweiten Abschnitt (II) wirkverbunden ist.

3. Kraftfahrzeug-Scheibenwischer (45) nach Anspruch 2, **dadurch gekennzeichnet, dass** die Hülse (75) mindestens einen Vorsprung aufweist, der in der Betriebsstellung in den ersten Aufnahmeabschnitt (125) und in der Wechselstellung in den zweiten Aufnahmeabschnitt (130) eingreift.

4. Kraftfahrzeug-Scheibenwischer (45) nach einem der Ansprüche 1 bis 3, **gekennzeichnet durch** ein Vorspannmittel (105), das mit dem Lagerteil (65) wirkverbunden ist und dieses in der Wechselstellung vorspannt.

5. Kraftfahrzeug-Scheibenwischer (45) nach einem der Ansprüche 1 bis 4, **dadurch gekennzeichnet, dass** das Wischblatt (55) in einer Aufnahme (60) des Lagerteils (65) mindestens teilweise aufgenommen ist.

6. Kraftfahrzeug (1) mit mindestens einer Kraftfahrzeug-Scheibe (20) und einem mit einer Wischerwelle (55) wirkverbundenen Antrieb, **gekennzeichnet durch** einen Kraftfahrzeug-Scheibenwischer (45) nach einem der vorhergehenden Ansprüche.

## Claims

1. Motor vehicle wiper (45) with a wiper arm (47) which is operatively connected to a wiper shaft (85) and has a wiper blade (55),
- the wiper arm (47) being fastened to a bearing part (65) which is mounted movably on the wiper shaft (85),
- the bearing part (65) being configured as a sleeve (75) which surrounds the wiper shaft (85) partially both in the operating position and the change position,
- which bearing part (65) is mounted on the wiper shaft (85) such that it can be displaced axially between an operating position of the motor vehicle wiper (45) and a change position which permits a change of the wiper blade (55), and
- which bearing part (65) is mounted on the wiper shaft (85) in a radially fixed manner in the operating position and in a radially adjustable manner for assuming the change position, and
- a locking means (90) which limits the axial and/or radial movement of the bearing part (65) being provided, which locking means (90) is operatively connected at least in sections in a positively locking manner to the sleeve (75),
**characterized in that** the locking means (90) has a profile (115, 120) which is configured transversely with respect to the longitudinal axis (L) of the wiper shaft (85) and on which a first receiving section (125), situated in the sleeve (75), and second receiving section (130) are guided such that they can be displaced axially and on which a third receiving section (135) which is situated between them is guided axially and rotationally.

2. Motor vehicle wiper (45) according to Claim 1, **characterized in that**, as viewed transversely with respect to the longitudinal axis of the wiper shaft (85), the profile has at least a first receiving section (125) and a second receiving section (130), the first receiving section (125) being operatively connected in a positively locking manner to the first section (I) of the sleeve (75) in the operating position, and the second receiving section (130) being operatively connected in a positively locking manner to the second section (II) in the change position.

3. Motor vehicle wiper (45) according to Claim 2, **characterized in that** the sleeve (75) has at least one projection which engages into the first receiving section (125) in the operating position and engages into the second receiving section (130) in the change position.

4. Motor vehicle wiper (45) according to one of Claims 1 to 3, **characterized by** a prestressing means (105) which is operatively connected to the bearing part (65) and prestresses the latter in the change position.

5. Motor vehicle wiper (45) according to one of Claims 1 to 4, **characterized in that** the wiper blade (55) is received at least partially in a receptacle (60) of the bearing part (65).

6. Motor vehicle (1) with at least one motor vehicle pane (20) and a drive which is operatively connected to a wiper shaft (55), **characterized by** a motor vehicle wiper (45) according to one of the preceding claims.

## Revendications

1. Essuie-glace (45) de véhicule automobile muni d'un bras d'essuie-glace (47), qui est en liaison fonctionnelle avec un arbre d'essuie-glace (85) et comprend un balai d'essuie-glace (55),
- le bras d'essuie-glace (47) étant fixé à une partie de palier (65), qui est montée de manière mobile sur l'arbre d'essuie-glace (85),
- la partie de palier (65) étant configurée sous forme de douille (75), qui entoure partiellement l'arbre d'essuie-glace (85) aussi bien dans la position de fonctionnement que dans la position de remplacement,
- laquelle partie de palier (65) étant montée de manière axialement coulissante sur l'arbre d'essuie-glace (85) entre une position de fonctionnement de l'essuie-glace (45) de véhicule automobile et une position de remplacement permettant un remplacement du balai d'essuie-glace (55), et
- laquelle partie de palier (65) étant montée sur l'arbre d'essuie-glace (85) de manière fixe radialement dans la position de fonctionnement et de manière réglable radialement pour prendre la position de remplacement, et
- un moyen d'arrêt (90) limitant le mouvement axial et/ou radial de la partie de palier (65) étant prévu, qui est relié fonctionnellement au moins en sections par complémentarité de forme à la douille (75),
**caractérisé en ce que**
le moyen d'arrêt (90) présente un profil (115, 120) configuré transversalement à l'axe longitudinal (L) de l'arbre d'essuie-glace (85), sur lequel une première section de réception (125) et une deuxième section de réception (130) se trouvant dans la douille (75) sont guidées de manière à pouvoir coulisser axialement, et une troisième section de réception (135) se trouvant entre celles-ci est guidée axialement et en rotation.

2. Essuie-glace (45) de véhicule automobile selon la revendication 1, **caractérisé en ce que** le profil, tel que vu transversalement à l'axe longitudinal de l'arbre d'essuie-glace (85), présente au moins une première section de réception (125) et une deuxième section de réception (130), la première section de réception (125) étant, dans la position de fonctionnement, reliée fonctionnellement par complémentarité de forme à la première section (I) de la douille (75) et la deuxième section de réception (130) étant, dans la position de remplacement, reliée fonctionnellement par complémentarité de forme à la deuxième section (II).

3. Essuie-glace (45) de véhicule automobile selon la revendication 2, **caractérisé en ce que** la douille (75) présente au moins une saillie qui, dans la position de fonctionnement, s'engage dans la première section de réception (125) et, dans la position de remplacement, dans la deuxième section de réception (130).

4. Essuie-glace (45) de véhicule automobile selon l'une quelconque des revendications 1 à 3, **caractérisé par** un moyen de précontrainte (105), qui est relié fonctionnellement à la partie de palier (65) et précontraint celle-ci dans la position de remplacement.

5. Essuie-glace (45) de véhicule automobile selon l'une quelconque des revendications 1 à 4, **caractérisé en ce que** le balai d'essuie-glace (55) est au moins partiellement reçu dans un réceptacle (60) de la partie de palier (65).

6. Véhicule automobile (1) comportant au moins une vitre de véhicule automobile (20) et un entraînement relié fonctionnellement à un arbre d'essuie-glace (55), **caractérisé par** un essuie-glace (45) de véhicule automobile selon l'une quelconque des revendications précédentes.
